# EUROPÄISCHE PATENTSCHRIFT

(11) **EP 1 834 833 B1**
(45) Veröffentlichungstag und Bekanntmachung des Hinweises auf die Patenterteilung: **12.09.2012**
(21) Anmeldenummer: 07005324.4
(22) Anmeldetag: 14.03.2007
(51) Int. Cl.: B60N 2/30, B60N 2/04

(54) **Kraftfahrzeuginneneinrichtung mit einem beweglichen Beifahrersitz**
Motor vehicle interior fittings with a moveable front passenger seat
Dispositif interne pour véhicule automobile doté d'un siège passager mobile

(30) Priorität: 16.03.2006 DE 10612137
(43) Veröffentlichungstag der Anmeldung: 19.09.2007
(73) Patentinhaber: GM Global Technology Operations LLC, Detroit, MI 48265-3000 (US)
(72) Erfinder: Maier, Jürgen, 67808 Weitersweiler (DE)
(74) Vertreter: Strauss, Peter

(56) Entgegenhaltungen:
- EP-A- 0 365 175
- EP-A- 0 572 811
- EP-A- 1 316 467
- DE-A1- 10 064 793
- JP-A- 2003 226 176

## Beschreibung

Die vorliegende Erfindung betrifft eine Kraftfahrzeuginneneinrichtung mit einem Beifahrersitz, der eine Rückenlehne aufweist, und einer vor dem Beifahrersitz angeordneten Öffnung zu einem Fußraumabschnitt, der sich unterhalb des Armaturenbretts befindet, wobei die Öffnung von dem Armaturenbrett und zwei seitlichen Innenraumteilen umgeben und der Beifahrersitz von einer Gebrauchsposition in eine nach vorne versetzte Nichtgebrauchsposition bewegt werden kann.

Aus dem Stand der Technik sind eine Vielzahl von Kraftfahrzeuginneneinrichtungen bekannt, die einen Beifahrersitz umfassen, der von einer Gebrauchsposition, in der eine Person auf dem Beifahrersitz Platz nehmen kann, in eine Nichtgebrauchsposition gebracht werden kann. Befindet sich der Beifahrersitz in der Nichtgebrauchsposition, so ist zusätzlicher Stauraum zum, Transport von Ladegut geschaffen.

So beschreibt die DE 10 2004 005 969 A1 beispielsweise einen Beifahrersitz, bei dem sowohl das Sitzteil als auch die Rückenlehne derart verschwenkt und geklappt werden können, dass die Unterseite des Sitzteils und die Rückseite der Rückenlehne nach oben weisen, wobei sowohl das Sitzteil als auch die Rückenlehne flach an dem Fahrzeugboden anliegen. Auf diese Weise nimmt der Beifahrersitz nicht mehr viel Platz in Anspruch, es wird vielmehr ein Stauraum geschaffen, dessen Boden nunmehr von der Unterseite des Sitzteils und der Rückseite der Rückenlehne gebildet ist.

Eine weitere Lösung zur Schaffung von Stauraum durch Bewegen des Beifahrersitzes in die Nichtgebrauchsposition ist ebenfalls aus der DE 10 2004 005 969 A1 bekannt. So beschreibt diese weiterhin einen Beifahrersitz, der von einer hinteren Gebrauchsposition in eine nach vorne versetzte Nichtgebrauchsposition verschoben werden, so dass hinter dem Beifahrersitz ein größerer Stauraum entsteht.

Letztgenannte Lösung hat einerseits den Nachteil, dass Gegenstände ungewollt in den Fußraumabschnitt unterhalb des Armaturenbretts gelangen können, wobei diese schwer erreichbar sind, solange der Beifahrersitz in der Nichtgebrauchsposition angeordnet ist. Andererseits stört der in die Nichtgebrauchsposition verschobene Beifahrersitz den optischen Eindruck der Kraftfahrzeuginneneinrichtung.

Die EP 1 316 467 A1 beschreibt eine Kraftfahrzeuginneneinrichtung mit einem Beifahrersitz, der eine Rückenlehne aufweist. Vor dem Beifahrersitz ist eine Öffnung zu einem Fußraumabschnitt angeordnet, der unterhalb eines Armaturenbretts ausgebildet ist. Die Öffnung zu dem Fußraumraumabschnitt ist nach oben durch das Armaturenbrett und zu den Seiten einerseits durch eine Mittelkonsole und andererseits durch die Innenseite der Beifahrertür begrenzt. Der bekannte Beifahrersitz kann von einer Gebrauchsposition, in der ein Fahrzeuginsasse den Beifahrersitz besetzen kann, in eine nach vorne versetzte Nichtgebrauchsposition bewegt werden, in der die Rückenlehne unter Abdeckung der Öffnung an das Armaturenbrett angrenzt. Dabei liegt das obere Ende der Rückenlehne bündig in einer Vertiefung innerhalb des Armaturenbretts ein, so dass der optische Eindruck der bekannten Kraftfahrzeuginneneinrichtung weniger gestört wird. Eine ähnliche Kraftfahrzeuginneneinrichtung ist ferner aus der dem Oberbegriff entsprechenden JP 2003 226 176 A bekannt.

Bei den aus der EP 1 316 467 A1 und der JP 2003 226 176 A bekannten Kraftfahrzeuginneneinrichtungen besteht weiterhin das Problem, dass die Beifahrersitze in der Nichtgebrauchsposition den Bau- oder Stauraum für die Kraftfahrzeuginneneinrichtung stark einschränken.

Es ist daher eine Aufgabe der vorliegenden Erfindung, eine Kraftfahrzeuginneneinrichtung mit einem Beifahrersitz zu schaffen, die die oben genannten Nachteile überwindet.

Diese Aufgabe wird durch die in Patentanspruch 1 angegebenen Merkmale gelöst. Vorteilhafte Ausführungsformen der Erfindung sind Gegenstand der Unteransprüche.

Die erfindungsgemäße Kraftfahrzeuginneneinrichtung weist einen Beifahrersitz mit einer Rückenlehne auf. Vor dem Beifahrersitz ist eine Öffnung zu einem Fußraumabschnitt angeordnet, der sich unterhalb des Armaturenbretts befindet. Die Öffnung ist von dem Armaturenbrett und seitlichen Innenraumteilen umgeben. So kann sich beispielsweise auf der linken Seite ein erstes Innenraumteil, das von der Mittelkonsole gebildet ist, und auf der rechten Seite ein zweites Innenraumteil erstrecken, das von einem Teil der Seitenverkleidung der Kraftfahrzeugtür und einem Teil einer Innenraumverkleidung der Karosserie gebildet wird. Der Beifahrersitz kann von einer Gebrauchsposition in eine nach vorne versetzte Nichtgebrauchsposition bewegt werden. Hierzu kann beispielsweise eine Schienenführung oder ein Schwenkmechanismus zwischen dem Beifahrersitz und dem Kraftfahrzeug vorgesehen sein, wobei der Beifahrersitz jedoch auch ohne jegliche Führung bewegt werden könnte. Erfindungsgemäß grenzt die Rückenlehne in der Nichtgebrauchsposition des Beifahrersitzes unter Abdeckung der Öffnung nicht nur an das Armaturenbrett, sondern auch an die seitlichen Innenraumteile an. Die Erfindung hat zunächst den Vorteil, dass Ladegut oder andere Gegenstände nicht mehr oder nur noch schwer ungewollt in den Fußraumabschnitt unterhalb des Armaturenbretts gelangen können, da die Öffnung durch die Rückenlehne weitgehend abgedeckt ist, die nach oben und zu beiden Seiten an das Armaturenbrett bzw. die seitlichen Innenraumteile angrenzt. Darüber hinaus fügt sich der Beifahrersitz in optisch ansprechender Weise in die Kraftfahrzeuginneneinrichtung ein. Bei der erfindungsgemäßen Kraftfahrzeuginneneinrichtung ist ferner ein oberer Abschnitt der Rückenlehne in der Nichtgebrauchsposition des Beifahrersitzes derart unter dem Armaturenbrett angeordnet, dass die Rückseite der Rückenlehne bündig mit der Oberfläche des Armaturenbretts ist. Darüber hinaus ist an der Oberseite der Rückenlehne eine Kopfstütze angeordnet, die zumindest bündig in der Oberseite der Rückenlehne versenkt werden kann. Auf diese Weise stellt die Kopfstütze keinerlei Hindernis dar, das zu einer Kollision mit dem Armaturenbrett führen würde, noch bevor die Rückenlehne an das Armaturenbrett angrenzen könnte. Entsprechendes gilt bei einer alternativen Ausführungsform der erfindungsgemäßen Kraftfahrzeuginneneinrichtung, bei der die Kopfstütze auf die Vorderseite der Rückenlehne geklappt werden kann, um nicht mit dem Armaturenbrett zu kollidieren.

In einer bevorzugten Ausführungsform der erfindungsgemäßen Kraftfahrzeuginneneinrichtung sind die Kontur der Öffnung und die Kontur der Rückenlehne derart aufeinander abgestimmt, dass die Rückenlehne über ihre gesamte Länge an den seitlichen Innenraumteilen und über ihre gesamte Breite an das Armaturenbrett angrenzt. So kann die Rückenlehne in der Nichtgebrauchsposition des Beifahrersitzes beispielsweise in der Art eines Puzzleteils in die Öffnung eingebracht werden. Diese Ausführungsform ist insofern von Vorteil, als dass kein Gegenstand mehr seitlich oder von oben an der Rückenlehne vorbei in den Fußraumabschnitt unterhalb des Armaturenbretts fallen kann.

In einer weiteren bevorzugten Ausführungsform der erfindungsgemäßen Kraftfahrzeuginneneinrichtung ist ein seitliches Innenraumteil die Mittelkonsole und das andere seitliche Innenraumteil eine Seitenverkleidung. So kann es sich beispielsweise um den in das Armaturenbrett übergehenden vorderen Abschnitt der Mittelkonsole handeln, während die Seitenverkleidung die Beifahrertür verkleidet.

Um zu verhindern, dass in dem Übergangsbereich zwischen den seitlichen Innenraumteilen und der Rückenlehne hervorstehende Kanten entstehen, die ein Beladen erschweren, das Verletzungsrisiko erhöhen und den optischen Eindruck stören, grenzt die Rückenlehne in einer besonders bevorzugten Ausführungsform der erfindungsgemäßen Kraftfahrzeuginneneinrichtung auch bündig an die seitlichen Innenraumteile an.

In einer vorteilhaften Ausführungsform der erfindungsgemäßen Kraftfahrzeuginneneinrichtung weist das Armaturenbrett eine längliche Vertiefung auf, in der der obere Abschnitt der Rückenlehne in der Nichtgebrauchsposition des Beifahrersitzes angeordnet ist. Eine solche Vertiefung kann sich beispielsweise quer zur Sitzrichtung erstrecken. Die Vertiefung hat den Vorteil, dass die Rückenlehne in der Nichtgebrauchsposition des Beifahrersitzes weiter vorne angeordnet sein kann, so dass hinter der Rückenlehne mehr Stauraum zur Verfügung steht.

Um den Raum in der zuvor genannten länglichen Vertiefung auch in der Gebrauchsposition des Beifahrersitzes sinnvoll nutzen zu können, ist in der Vertiefung bei einer besonders bevorzugten Ausführungsform der erfindungsgemäßen Kraftfahrzeuginneneinrichtung eine Einrichtung, wie beispielsweise ein Verbandskasten, ein Getränkehalter o. ä., vorzugsweise ein Handschuhfach, angeordnet, die von einer ersten Position innerhalb der Vertiefung in eine die Vertiefung für die Rückenlehne freigebende zweite Position verschwenkt oder bewegt werden kann.

In einer weiteren vorteilhaften Ausführungsform der erfindungsgemäßen Kraftfahrzeuginneneinrichtung umfasst die Armaturentafel eine bewegliche Abdeckung, die von einer ersten Position, in der die Vertiefung von der Abdeckung verdeckt ist, in eine die Vertiefung für die Rückenlehne freigebende zweite Position bewegt werden kann, wobei der in der Vertiefung einliegende obere Abschnitt der Rückenlehne von der Abdeckung verdeckbar ist. So kann beispielsweise eine entsprechende Klappe vorgesehen sein, die den oberen Abschnitt der Rückenlehne verdeckt und vorteilhafterweise hintergreift. Eine solche Klappe kann nach dem Einbringen des oberen Abschnitts der Rückenlehne in die Vertiefung somit in Richtung der ersten Position verschwenkt werden, bis der obere Abschnitt hintergreifend verdeckt und gehalten wird.

In einer weiteren vorteilhaften Ausführungsform der erfindungsgemäßen Kraftfahrzeuginneneinrichtung kann die Rückenlehne gegenüber einem Sitzteil des Beifahrersitzes vor- und zurückgeklappt werden.

Um das Sitzteil des Beifahrersitzes besonders Platz sparend in dem Fußraumabschnitt unterhalb des Armaturenbretts anordnen zu können, ist das Sitzteil des Beifahrersitzes in der Nichtgebrauchsposition in einer weiteren bevorzugten Ausführungsform der erfindungsgemäßen Kraftfahrzeuginneneinrichtung schräggestellt.

In einer weiteren vorteilhaften Ausführungsform der erfindungsgemäßen Kraftfahrzeuginneneinrichtung ist die Rückenlehne in der Nichtgebrauchsposition des Beifahrersitzes nach vorne geneigt oder in einer im Wesentlichen aufrechten Position angeordnet. Bei der ersten Variante ist von Vorteil, dass eventuelle vorhandene Aufnahmen leichter von dem Fahrersitz aus zu erreichen sind. Bei der zweiten Variante wird ein Mittelweg geschaffen, bei dem die Aufnahmen leicht erreichbar sind, während der Stauraum hinter dem Beifahrersitz größer ist.

In einer weiteren vorteilhaften Ausführungsform der erfindungsgemäßen Kraftfahrzeuginneneinrichtung sind daher an der Rückseite der Rückenlehne Aufnahmen, vorzugsweise Getränkehalter oder Fächer, zu Aufnahme von Gegenständen vorgesehen.

Gemäß einer besonders bevorzugten Ausführungsform der erfindungsgemäßen Kraftfahrzeuginneneinrichtung ist der Beifahrersitz auf einem Sitzträger angeordnet und kann Sitzrichtung entlang des Sitzträgers verschoben werden. Der den Beifahrersitz tragende Sitzträger kann mit Hilfe eines Schwenkmechanismus von einer hinteren Position in eine nach vorne versetzte vordere Position verschwenkt werden. Hierdurch ist ein besonders schnelles und komfortables Bewegen des Beifahrersitzes von der Gebrauchsposition in die Nichtgebrauchsposition und umgekehrt möglich.

In einer weiteren vorteilhaften Ausführungsform der erfindungsgemäßen Kraftfahrzeuginneneinrichtung weist der Schwenkmechanismus mindestens einen vorderen und einen hinteren Schwenkhebel auf, die einerseits an dem Sitzträger und andererseits an dem Kraftfahrzeug angelenkt sind.

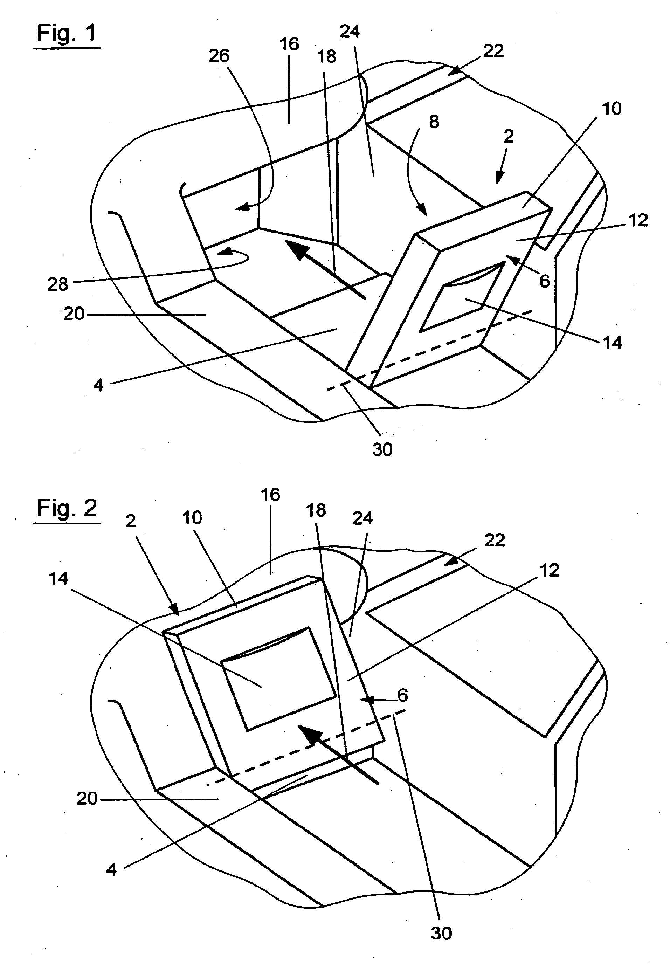

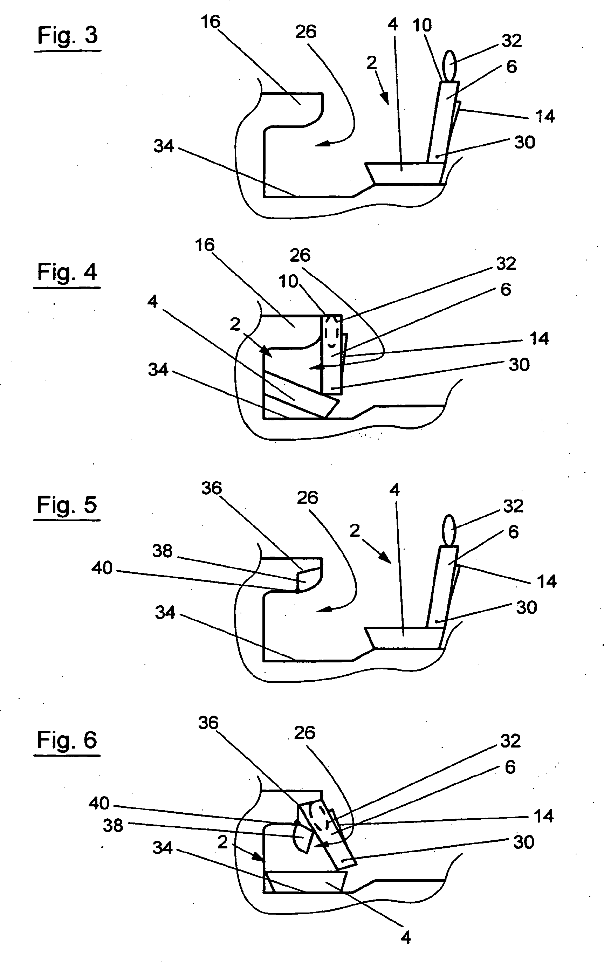

Die Erfindung wird im Folgenden an Hand von beispielhaften Ausführungsformen unter Bezugnahme auf die beigefügten Zeichnungen näher erläutert, wobei die Fig. 1 bis 4 keine Ausführungsformen der Erfindung zeigen, jedoch dem besseren Verständnis der erfindungsgemäßen Ausführungsformen nach den Fig. 5 bis 10 dienen. Es zeigen im Einzelnen:
- Fig. 1: eine perspektivische Darstellung einer Kraftfahrzeuginneneinrichtung mit dem Beifahrersitz in der Gebrauchsposition,
- Fig. 2: die Kraftfahrzeuginneneinrichtung von Fig. 1 mit dem Beifahrersitz in der Nichtgebrauchsposition,
- Fig. 3: eine schematische Seitenansicht einer weiteren Ausführungsform einer Kraftfahrzeuginneneinrichtung mit dem Beifahrersitz in der Gebrauchsposition,
- Fig. 4: die Kraftfahrzeuginneneinrichtung von Fig. 3 mit dem Beifahrersitz in der Nichtgebrauchsposition,
- Fig. 5: eine schematische Seitenansicht einer ersten Ausführungsform der erfindungsgemäßen Kraftfahrzeuginneneinrichtung mit dem Beifahrersitz in der Gebrauchsposition,
- Fig. 6: die Kraftfahrzeuginneneinrichtung von Fig. 5 mit dem Beifahrersitz in der Nichtgebrauchsposition,
- Fig. 7: eine schematische Seitenansicht einer zweiten Ausführungsform der erfindungsgemäßen Kraftfahrzeuginneneinrichtung mit dem Beifahrersitz in der Gebrauchsposition,
- Fig. 8: die Kraftfahrzeuginneneinrichtung von Fig. 7 mit dem Beifahrersitz in der Nichtgebrauchsposition,
- Fig. 9: eine schematische Seitenansicht eines Schwenkmechanismus für den Beifahrersitz mit dem Beifahrersitz in der Gebrauchsposition und
- Fig. 10: den Schwenkmechanismus von Fig. 9 mit dem Beifahrersitz in der Nichtgebrauchsposition.

Die Fig. 1 und 2 zeigen den grundlegenden Aufbau der in den nachfolgenden Figuren dargestellten Ausführungsformen der Kraftfahrzeuginneneinrichtung in einer perspektivischen Darstellung.

Die Kraftfahrzeuginneneinrichtung, die in Fig. 1 dargestellt ist, weist einen Beifahrersitz 2 auf. Der Beifahrersitz 2 umfasst ein Sitzteil 4 und eine Rückenlehne 6. Die Rückenlehne 6 weist eine Vorderseite 8, eine Oberseite 10 und eine Rückseite 12 auf. An der Rückseite 12 der Rückenlehne 6 ist eine taschenartige Aufnahme 14 vorgesehen, deren Öffnung in der dargestellten Position nach oben weist und die der Aufnahme von Gegenständen, wie beispielsweise Getränkebehältern, dient.

Die Kraftfahrzeuginneneinrichtung umfasst ferner ein Armaturenbrett 16, das sich quer zu der Fahrtrichtung bzw. Sitzrichtung 18 erstreckt und dem Beifahrersitz 2 gegenüberliegend angeordnet ist. Darüber hinaus ist auf der linken Seite des Beifahrersitzes 2 eine Mittelkonsole 20 vorgesehen, die sich in Fahrtrichtung erstreckt und in ihrem vorderen Bereich in das höher angeordnete Armaturenbrett 16 übergeht. Zur Rechten des Beifahrersitzes 2 ist eine Beifahrertür 22 vorgesehen, die an ihrer Innenseite eine Seitenverkleidung 24 aufweist.

Das Armaturenbrett 16, die Mittelkonsole 20 und die Seitenverkleidung 24 umgeben eine Öffnung 26 zu einem Fußraumabschnitt 28, der unterhalb des Armaturenbretts 16 angeordnet ist. Des Weiteren kann der Beifahrersitz 2 von einer Gebrauchsposition, die in Fig. 1 dargestellt ist, in eine nach vorne in Sitzrichtung 18 versetzte Nichtgebrauchsposition bewegt werden, die in Fig. 2 gezeigt ist. In der Nichtgebrauchsposition grenzt die Rückenlehne 2 unter Abdeckung der Öffnung 26 oben an das Armaturenbrett 16 und seitlich zum einen an die Mittelkonsole 20 und zum anderen an die Seitenverkleidung 24 der Beifahrertür 22 an (Fig. 2). Dabei sind die Konturen der Öffnung 26 und der Rückenlehne 6 derart aufeinander abgestimmt bzw. aneinander angepasst, dass die Rückenlehne 6 über ihre gesamte Breite an dem Armaturenbrett 16 und über ihre gesamte Länge an der Mittelkonsole 20 und der Seitenverkleidung 24 angrenzt. Die Kontur bezeichnet hierbei diejenige Kontur der Rückenlehne 6 oder der Öffnung 26, wenn diese in Sitzrichtung 18 betrachtet werden. Die Rückenlehne 6 ist in der Nichtgebrauchsposition um eine Schwenkachse 30, die sich quer zu der Sitzrichtung 18 erstreckt, gegenüber dem Sitzteil 4 verschwenkt. Dabei grenzt die Rückenlehne 6 bündig an das Armaturenbrett 16, die Mittelkonsole 20 und die Seitenverkleidung 24 an, wie dies später unter Bezugnahme auf die nachfolgenden Figuren eingehender erläutert wird.

Die Fig. 3 und 4 zeigen eine Kraftfahrzeuginneneinrichtung nach den Fig. 1 und 2, wobei an der Oberseite 10 der Rückenlehne 6 eine sich nach oben erstreckende Kopfstütze 32 vorgesehen ist. Die Kopfstütze 32 kann zumindest bündig in die Oberseite 10 der Rückenlehne 6 versenkt werden, wie dies in Fig. 4 an Hand der gestrichelten Linie gezeigt ist. Der Beifahrersitz 2 kann nun derart in die nach vorne versetzte Nichtgebrauchsposition bewegt werden, dass die Oberseite 10 der Rückenlehne 6 bündig mit der Oberfläche des Armaturenbretts 16 ist, wie dies in Fig. 4 dargestellt ist. Wie der Fig. 4 ferner zu entnehmen ist, ist das Sitzteil 4 in der Nichtgebrauchsposition des Beifahrersitzes 2 schräggestellt, um sich optimal in den Fußraumabschnitt 28 unterhalb des Armaturenbretts 16 einzupassen. Bei dieser Kraftfahrzeuginneneinrichtung ist die Rückenlehne 6 in der Nichtgebrauchsposition des Beifahrersitzes 2 im Wesentlichen vertikal ausgerichtet.

Die Fig. 5 und 6 zeigen eine erste Ausführungsform der erfindungsgemäßen Kraftfahrzeuginneneinrichtung, bei der das Armaturenbrett 16 eine dem Fahrzeugboden 34 und dem Beifahrersitz 2 zugewandte längliche Vertiefung 36 aufweist. Innerhalb der Vertiefung 36, die sich quer zu der Fahrtrichtung bzw. Sitzrichtung 18 erstreckt, ist ein Handschuhfach 38 angeordnet, das um eine Schwenkachse 40 von einer ersten Position, in der das Handschuhfach 38 innerhalb der Vertiefung 36 angeordnet ist (Fig. 5), in eine zweite Position verschwenkt werden kann, in der die Vertiefung 36 von dem Handschuhfach 38 für die Rückenlehne 6 freigegeben ist (Fig. 6) . Somit kann die Rückenlehne 6 derart nach vorne um die Schwenkachse 30 unter das Armaturenbrett 16 verschwenkt werden, dass ein oberer Abschnitt der Rückenlehne 6 in der Nichtgebrauchsposition des Beifahrersitzes 6 in der Vertiefung 36 angeordnet ist, wie dies in Fig. 6 dargestellt ist.

In dieser Position ist die Rückseite 12 der Rückenlehne 6 bündig mit der Oberseite des Armaturenbretts 16. Bei der Ausführungsform nach den Fig. 5 und 6 wäre es ebenso vorteilhaft, wenn die Kopfstütze 32 nach vorne auf die Vorderseite 8 der Rückenlehne 6 verschwenkbar wäre. Des Weiteren ist die Rückenlehne 6 in der Nichtgebrauchsposition des Beifahrersitzes 2 nach vorne geneigt, was einen einfacheren Zugriff auf die Gegenstände innerhalb der Aufnahme 14 von Seiten des Fahrersitzes (nicht dargestellt) ermöglicht.

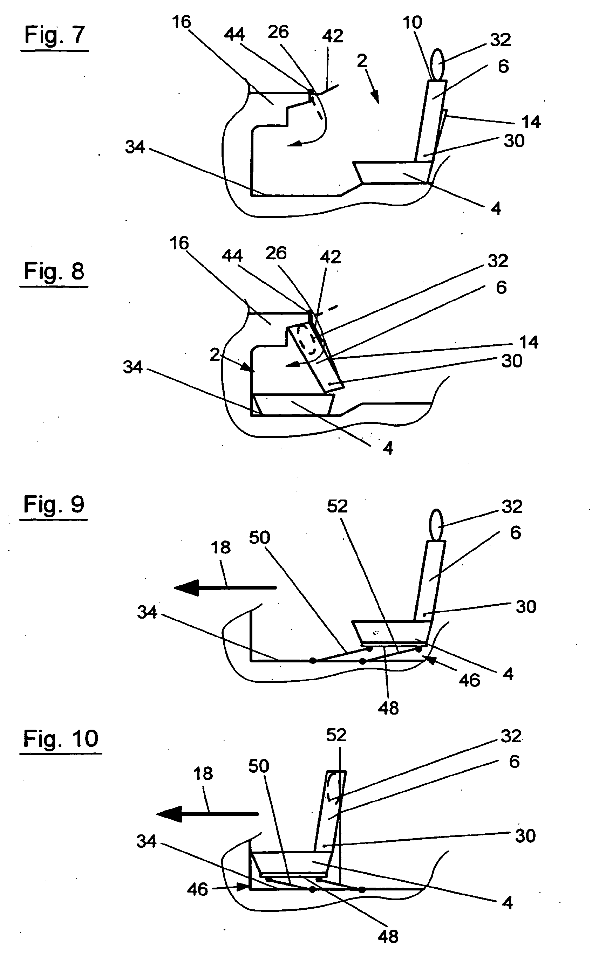

In einer zweiten Ausführungsform der erfindungsgemäßen Kraftfahrzeuginneneinrichtung (Fig. 7 und 8) ist die in den Fig. 5 und 6 dargestellte Ausführungsform insofern modifiziert, als dass die Vertiefung 36 mittels einer Abdeckung 42 verdeckt ist, die von einer ersten, verdeckenden Position um eine Schwenkachse 44 in eine zweite, die Vertiefung 36 für die Rückenlehne 6 freigebende zweite Position verschwenkt werden kann. Nachdem der obere Abschnitt der Rückenlehne 6 in der Vertiefung 36 eingebracht wurde, kann die Abdeckung 42 wieder in die in Fig. 8 dargestellte zweite Position zurückbewegt werden, um den oberen Abschnitt der Rückenlehne 6 zu halten und zu verdecken.

In den Fig. 9 und 10 ist eine Ausführungsform eines Schwenkmechanismus 46 gezeigt, bei dem der Beifahrersitz 2 mit der Unterseite des Sitzteils 4 auf einem Sitzträger 48 angeordnet ist, entlang dessen der Beifahrersitz 2 in Sitzrichtung 18 verschoben werden kann, wobei der Sitzträger 48 mit Hilfe des Schwenkmechanismus 46 von einer hinteren Position in eine nach vorne versetzte vordere Position verschwenkt werden kann, wie dies in Fig. 10 angedeutet ist. Zu diesem Zweck weist der Schwenkmechanismus 46 mindestens einen vorderen Schwenkhebel 50 und einen hinteren Schwenkhebel 52 auf, die jeweils einerseits an dem Sitzträger 48 und andererseits an dem Fahrzeugboden 34 angelenkt sind.

### Bezugszeichenliste

- 2: Beifahrersitz
- 4: Sitzteil
- 6: Rückenlehne
- 8: Vorderseite der Rückenlehne
- 10: Oberseite der Rückenlehne
- 12: Rückseite der Rückenlehne
- 14: Aufnahme
- 16: Armaturenbrett
- 18: Sitzrichtung
- 20: Mittelkonsole
- 22: Beifahrertür
- 24: Seitenverkleidung
- 26: Öffnung
- 28: Fußraumabschnitt unterhalb des Armaturenbretts
- 30: Schwenkachse der Rückenlehne
- 32: Kopfstütze
- 34: Fahrzeugboden
- 36: Vertiefung
- 38: Handschuhfach
- 40: Schwenkachse des Handschuhfachs
- 42: Abdeckung
- 44: Schwenkachse der Abdeckung
- 46: Schwenkmechanismus
- 48: Sitzträger
- 50: vorderer Schwenkhebel
- 52: hinterer Schwenkhebel

## Patentansprüche

1. Kraftfahrzeuginneneinrichtung mit einem Beifahrersitz (2), der eine Rückenlehne (6) aufweist, und einer vor dem Beifahrersitz (2) angeordneten Öffnung (26) zu einem Fußraumabschnitt (28), der sich unterhalb des Armaturenbretts (16) befindet, wobei die Öffnung (26) von dem Armaturenbrett (16) und seitlichen Innenraumteilen (20, 24) umgeben und der Beifahrersitz (2) von einer Gebrauchsposition in eine nach vorne versetzte Nichtgebrauchsposition bewegbar ist, in der die Rückenlehne (6) unter Abdeckung der Öffnung (26) an das Armaturenbrett (16) und an die seitlichen Innenraumteile (20, 24) angrenzt, während ein oberer Abschnitt der Rückenlehne (6) in der Nichtgebrauchsposition des Beifahrersitzes (2) derart unter dem Armaturenbrett (16) angeordnet ist, dass die Rückseite (12) der Rückenlehne (6) bündig mit der Oberfläche des Armaturenbretts (16) ist, wobei an der Oberseite (10) der Rückenlehne (6) eine Kopfstütze (32) angeordnet ist, **dadurch gekennzeichnet, dass** die Kopfstütze (32) zur Verhinderung einer Kollision mit dem Armaturenbrett (16) entweder zumindest bündig in der Oberseite (10) der Rückenlehne (6) versenkbar oder auf die Vorderseite (8) der Rückenlehne (6) klappbar ist.

2. Kraftfahrzeuginneneinrichtung nach Anspruch 1, **dadurch gekennzeichnet, dass** die Kontur der Öffnung (26) und die Kontur der Rückenlehne (6) derart aufeinander abgestimmt sind, dass die Rückenlehne (6) über ihre gesamte Länge an den seitlichen Innenraumteilen (20, 24) und über ihre gesamte Breite an das Armaturenbrett (16) angrenzt.

3. Kraftfahrzeuginneneinrichtung nach einem der vorangehenden Ansprüche, **dadurch gekennzeichnet, dass** ein seitliches Innenraumteil die Mittelkonsole (20) und das andere seitliche Innenraumteil eine Seitenverkleidung (24) ist.

4. Kraftfahrzeuginneneinrichtung nach einem der vorangehenden Ansprüche, **dadurch gekennzeichnet, dass** die Rückenlehne (6) auch bündig an die seitlichen Innenraumteile (20, 24) angrenzt.

5. Kraftfahrzeuginneneinrichtung nach einem der vorangehenden Ansprüche, **dadurch gekennzeichnet, dass** das Armaturenbrett (16) eine längliche Vertiefung (36) aufweist, in der der obere Abschnitt der Rückenlehne (6) in der Nichtgebrauchsposition des Beifahrersitzes (2) angeordnet ist.

6. Kraftfahrzeuginneneinrichtung nach einem der vorangehenden Ansprüche, **dadurch gekennzeichnet, dass** in der Vertiefung (36) eine Einrichtung, vorzugsweise ein Handschuhfach (38), angeordnet ist, die von einer ersten Position innerhalb der Vertiefung (36) in eine die Vertiefung (36) für die Rückenlehne (6) freigebende zweite Position verschwenkbar oder bewegbar ist.

7. Kraftfahrzeuginneneinrichtung nach einem der vorangehenden Ansprüche, **dadurch gekennzeichnet, dass** die Armaturentafel (16) eine bewegliche Abdeckung (42) umfasst, die von einer ersten Position, in der die Vertiefung (36) von der Abdeckung (42) verdeckt ist, in eine die Vertiefung (36) für die Rückenlehne (6) freigebende zweite Position bewegbar ist, wobei der in der Vertiefung (36) einliegende obere Abschnitt der Rückenlehne (6) von der Abdeckung (42) verdeckbar ist.

8. Kraftfahrzeuginneneinrichtung nach einem der vorangehenden Ansprüche, **dadurch gekennzeichnet, dass** die Rückenlehne (6) gegenüber einem Sitzteil (4) des Beifahrersitzes (2) vor-und zurückklappbar ist.

9. Kraftfahrzeuginneneinrichtung nach Anspruch 8, **dadurch gekennzeichnet, dass** das Sitzteil (4) des Beifahrersitzes (2) in der Nichtgebrauchsposition schräggestellt ist.

10. Kraftfahrzeuginneneinrichtung nach einem der Ansprüche 8 oder 9, **dadurch gekennzeichnet, dass** die Rückenlehne (6) in der Nichtgebrauchsposition des Beifahrersitzes (2) nach vorne geneigt oder in einer im Wesentlichen aufrechten Position angeordnet ist.

11. Kraftfahrzeuginneneinrichtung nach einem der vorangehenden Ansprüche, **dadurch gekennzeichnet, dass** an der Rückseite (12) der Rückenlehne (6) Aufnahmen (14), vorzugsweise Getränkehalter oder Fächer, zur Aufnahme von Gegenständen vorgesehen sind.

12. Kraftfahrzeuginneneinrichtung nach einem der vorangehenden Ansprüche, **dadurch gekennzeichnet, dass** der Beifahrersitz (2) auf einem Sitzträger (48) angeordnet und in Sitzrichtung (18) entlang des Sitzträgers (48) verschiebbar ist, wobei der den Beifahrersitz (2) tragende Sitzträger (48) mit Hilfe eines Schwenkmechanismus (46) von einer hinteren Position in eine nach vorne versetzte vordere Position verschwenkbar ist.

13. Kraftfahrzeuginneneinrichtung nach Anspruch 12, **dadurch gekennzeichnet, dass** der Schwenkmechanismus (46) mindestens einen vorderen und einen hinteren Schwenkhebel (50, 52)aufweist, die einerseits an dem Sitzträger (48) und andererseits an dem Kraftfahrzeug angelenkt sind.

## Claims

1. An interior fitting device for a motor vehicle, comprising a passenger seat (2) having a backrest (6), and an opening (26) to a foot space section (28), which opening (26) is arranged in front of the passenger seat (2), which foot space section (28) is disposed beneath the dashboard (16), with the opening (26) being enclosed by the dashboard (16) and the lateral interior components (20, 24), and the passenger seat (2) being movable from an in-use position to a forwardly displaced non-use position in which the backrest (6) borders the dashboard (16) and the lateral interior components (20, 24) by covering the opening (26), while an upper section of the backrest (6) in the non-use position of the passenger seat (2) is arranged beneath the dashboard (16) in such a way that the rear side (12) of the backrest (6) is flush with the surface of the dashboard (16), with a headrest (32) being arranged on the upper side (10) of the backrest (6), **characterized in that** for the purpose of preventing a collision with the dashboard (16) the headrest (32) can be retracted either at least flush in the upper side (10) of the backrest (6) or can be folded onto the front side (8) of the backrest (6).

2. An interior fitting device for a motor vehicle according to claim 1, **characterized in that** the contour of the opening (26) and the contour of the backrest (6) are adjusted to one another in such a way that the backrest (6) borders the lateral interior components (20, 24) over its entire length and the dashboard (16) over its entire width.

3. An interior fitting device for a motor vehicle according to one of the preceding claims, **characterized in that** a lateral interior component (20) is the center console (20) and the other lateral interior component is a side paneling (24).

4. An interior fitting device for a motor vehicle according to one of the preceding claims, **characterized in that** the backrest (6) also borders the lateral interior components (20, 24) in a flush manner.

5. An interior fitting device for a motor vehicle according to one of the preceding claims, **characterized in that** the dashboard (16) comprises an elongated depression (36) in which the upper section of the backrest (6) is arranged in the non-use position of the passenger seat (2).

6. An interior fitting device for a motor vehicle according to one of the preceding claims, **characterized in that** a device, preferably a glove compartment (38), is arranged in the depression (36), which device can be pivoted or moved from a first position within the depression (36) to a second position releasing the depression (36) for the backrest (6).

7. An interior fitting device for a motor vehicle according to one of the preceding claims, **characterized in that** the dashboard (16) comprises a movable cover (42) which can be moved from a first position in which the depression (36) is covered by the cover (42) to a second position releasing the depression (36) for the backrest (6), wherein the upper section of the backrest (6) disposed in the depression (36) can be covered by the cover (42).

8. An interior fitting device for a motor vehicle according to one of the preceding claims, **characterized in that** the backrest (6) can be folded forwardly and backwardly relative to a seat part (4) of the passenger seat (2).

9. An interior fitting device for a motor vehicle according to claim 8, **characterized in that** the seat part (4) of the passenger seat (2) is positioned at an incline in the non-use position.

10. An interior fitting device for a motor vehicle according to one of the claims 8 or 9, **characterized in that** in the non-use position of the passenger seat (2) the backrest (6) is forwardly inclined or is arranged in a substantially upright position.

11. An interior fitting device for a motor vehicle according to one of the preceding claims, **characterized in that** receptacles (14) for accommodating items, preferably beverage holders or compartments, are provided on the rear side (12) of the backrest (6).

12. An interior fitting device for a motor vehicle according to one of the preceding claims, **characterized in that** the passenger seat (2) is arranged on a seat carrier (48) and is displaceable along the seat carrier (48) in the sitting direction, with the seat carrier (48) carrying the passenger seat (2) being pivotable by means of a pivoting mechanism (46) from a rear position to a forwardly displaced front position.

13. An interior fitting device for a motor vehicle according to claim 12, **characterized in that** the pivoting mechanism (46) comprises at least one front and one rear pivot lever (50, 52), which are linked on the one hand to the seat carrier (48) and on the other hand to the motor vehicle.

## Revendications

1. Aménagement intérieur de véhicule à moteur avec un siège passager (2) présentant un dossier (6) et une ouverture (26) disposée devant le siège passager (2) et donnant sur une partie formant une niche pour les pieds (28) qui se trouve en dessous du tableau de bord (16), l'ouverture (26) étant entourée par le tableau de bord (16) et des parties d'intérieur latérales (20, 24) et le siège passager (2) pouvant être déplacé d'une position d'utilisation à une position de non-utilisation décalée vers l'avant, dans laquelle le dossier (6) est contigu au tableau de bord (16) et aux parties d'intérieur latérales (20, 24) en couvrant l'ouverture (26), tandis qu'une partie supérieure du dossier (6) est disposée sous le tableau de bord (16), dans la position de non-utilisation du siège passager (2), de telle manière que la face arrière (12) du dossier (6) soit de niveau avec la surface du tableau de bord (16), un appuie-tête (32) étant disposé sur la face supérieure (10) du dossier (6), **caractérisé en ce que** l'appuie-tête (32) peut, pour éviter une collision avec le tableau de bord (16), soit être renfoncé au moins en affleurement dans la face supérieure (10) du dossier (6), soit être rabattu sur la face avant (8) du dossier (6).

2. Aménagement intérieur de véhicule à moteur selon la revendication 1, **caractérisé en ce que** le contour de l'ouverture (26) et le contour du dossier (6) sont adaptés l'un à l'autre de telle manière que le dossier (6) soit contigu sur toute sa longueur aux parties d'intérieur latérales (20, 24) et sur toute sa largeur au tableau de bord (16).

3. Aménagement intérieur de véhicule à moteur selon l'une des revendications précédentes, **caractérisé en ce qu'**une partie d'intérieur latérale est la console centrale (20) et l'autre partie d'intérieur latérale est un habillage latéral (24).

4. Aménagement intérieur de véhicule à moteur selon l'une des revendications précédentes, **caractérisé en ce que** le dossier (6) est aussi contigu en affleurement aux parties d'intérieur latérales (20, 24).

5. Aménagement intérieur de véhicule à moteur selon l'une des revendications précédentes, **caractérisé en ce que** le tableau de bord (16) présente un creux allongé (36) dans lequel la partie supérieure du dossier (6) est disposée dans la position de non-utilisation du siège passager (2).

6. Aménagement intérieur de véhicule à moteur selon l'une des revendications précédentes, **caractérisé en ce qu'**il est prévu dans le creux (36) un aménagement, de préférence une boîte à gants (38), qui peut être basculé ou déplacé d'une première position à l'intérieur du creux (36) à une deuxième position dégageant le creux (36) pour le dossier (6).

7. Aménagement intérieur de véhicule à moteur selon l'une des revendications précédentes, **caractérisé en ce que** le tableau de bord (16) présente une couverture (42) mobile, qui peut être déplacée d'une première position dans laquelle le creux (36) est couvert par la couverture (42) à une deuxième position dégageant le creux (36) pour le dossier (6), la partie supérieure du dossier (6) introduite dans le creux (36) pouvant être couverte par la couverture (42).

8. Aménagement intérieur de véhicule à moteur selon l'une des revendications précédentes, **caractérisé en ce que** le dossier (6) peut être replié vers l'avant et l'arrière par rapport à une partie d'assise (4) du siège passager (2).

9. Aménagement intérieur de véhicule à moteur selon la revendication 8, **caractérisé en ce que** la partie d'assise (4) du siège passager (2) est placée en oblique dans la position de non-utilisation.

10. Aménagement intérieur de véhicule à moteur selon l'une des revendications 8 ou 9, **caractérisé en ce que** le dossier (6) est incliné vers l'avant dans la position de non-utilisation du siège passager (2) ou disposé dans une position sensiblement verticale.

11. Aménagement intérieur de véhicule à moteur selon l'une des revendications précédentes, **caractérisé en ce qu'**il est prévu sur la face arrière (12) du dossier (6) des réceptacles (14), de préférence des porte-boissons ou des compartiments destinés à recevoir des objets.

12. Aménagement intérieur de véhicule à moteur selon l'une des revendications précédentes, **caractérisé en ce que** le siège passager (2) est disposé sur un support de siège (48) et peut être déplacé dans le sens du siège (18) le long du support de siège (48), le support de siège (48) qui porte le siège passager (2) pouvant être basculé d'une position arrière à une position avant décalée vers l'avant à l'aide d'un mécanisme de basculement (46).

13. Aménagement intérieur de véhicule à moteur selon la revendication 12, **caractérisé en ce que** le mécanisme de basculement (46) présente au moins un levier de basculement avant et un levier de basculement arrière (50, 52) qui sont articulés d'une part sur le support de siège (48) et d'autre part sur le véhicule à moteur.
